# EUROPÄISCHE PATENTSCHRIFT

(11) **EP 0 759 861 B1**
(45) Veröffentlichungstag und Bekanntmachung des Hinweises auf die Patenterteilung: **24.10.2001**
(21) Anmeldenummer: 96914895.6
(22) Anmeldetag: 10.04.1996
(51) Int. Cl.: B60R 22/46

(54) **KUPPLUNG ZUR DREHMOMENTÜBERTRAGUNG VON EINEM DURCH EIN TREIBMITTEL BETRIEBENEN DREHANTRIEB AUF EINE GURTWELLE EINES SICHERHEITSGURTAUFROLLERS ZUM STRAFFEN EINES SICHERHEITSGURTES**
COUPLING FOR TRANSMITTING TORQUE FROM A FLUID-DRIVEN ROTARY DRIVE TO A BELT AXLE OF A SAFETY BELT WINDER FOR TIGHTENING A SAFETY BELT
ACCOUPLEMENT POUR LA TRANSMISSION DU COUPLE D'UN SYSTEME D'ENTRAINEMENT ROTATIF MU PAR UN FLUIDE A UN AXE DE CEINTURE D'UN ENROULEUR SERVANT A TENDRE UNE CEINTURE DE SECURITE

(30) Priorität: 10.04.1995 DE 29506208 U
(43) Veröffentlichungstag der Anmeldung: 05.03.1997
(73) Patentinhaber: TRW Occupant Restraint Systems GmbH & Co. KG, 73551 Alfdorf (DE)
(72) Erfinder: SPECHT, Martin, D-82340 Feldafing (DE); KRAUSS, Walter, D-80689 München (DE)
(74) Vertreter: Degwert, Hartmut, Dipl.-Phys.
(86) Internationale Anmeldenummer: EP9601538
(87) Internationale Veröffentlichungsnummer: WO9632305

(56) Entgegenhaltungen:
- EP-A- 0 093 233
- DE-A- 3 131 637
- DE-A- 3 939 233
- DE-A- 4 242 784
- DE-A- 4 304 492
- DE-A- 4 322 798
- DE-U- 29 500 807

## Beschreibung

Die Erfindung betrifft eine Kupplung zur Drehmomentübertragung von einem durch ein Treibmittel betriebenen Drehantrieb auf eine Gurtwelle eines Sicherheitsgurtaufrollers zum Straffen eines Sicherheitsgurtes mit wenigstens einem im Ruhezustand im entkuppelten Zustand gehaltenen Kupplungselement, das für die Drehmomentübertragung in Kupplungseingriff mit einem mit der Gurtwelle kraftschlüssig verbundenen Eingriffsteil eingerückt wird, wobei das Kupplungselement an einem drehbaren Bauteil gelagert und in den Kupplungseingriff schwenkbar ist und von einer Halteeinrichtung in entkuppeltem Zustand gehalten ist. Eine solche Kupplung ist aus der DE-A-4322798 bekannt.

Aufgabe der Erfindung ist es, eine derartige Kupplung zu schaffen, welche einen kompakten Aufbau gewährleistet.

Diese Aufgabe wird erfindungsgemäß dadurch gelöst, daß das Kupplungselement mit Hilfe der Halteeinrichtung an zwei unterschiedlichen vom Treibmittel angetriebenen Bauteilen abgestützt ist, und daß durch eine Relativbewegung des einen Bauteils gegenüber dem anderen Bauteil von der Halteeinrichtung auf das Kupplungselement eine Kraft in Einrückrichtung ausgeübt wird.

Bei dem Treibmittel kann es sich um ein in einem Kraftspeicher gehaltenes Antriebsmedium, beispielsweise ein Druckgas, oder ein pyrotechnisches Treibmittel handeln, bei welchem durch Zündung ein Druckgas erzeugt wird. Der Drehantrieb kann als Rotationsantrieb ausgebildet sein, wie er in der EP 0 648 652 A1 oder der EP 0 673 811 A1 beschrieben ist. Es kann sich jedoch auch um eine von einem von einem Linearkolbenantrieb über ein Zugseil angetriebene Scheibe handeln, welche beispielsweise in der EP 0 529 265 A1 oder der GB 2 180 734 A1 beschrieben ist.

Das Kupplungselement kann gegen eine von der Halteeinrichtung ausgeübten Haltekraft, insbesondere Federkraft, in den Kupplungseingriff geschwenkt werden. Die vom Treibmittel erzeugte Krafteinwirkung ist bevorzugt nach dem Einrückvorgang beendet. Das Kupplungselement kann während der Drehmomentübertragung durch eine dabei wirkende Selbsthaltekraft zwischen dem Eingriffsteil und dem Kupplungselement in der Eingriffsposition gehalten werden. In bevorzugter Weise kann das Kupplungselement nach dem Straffen des Sicherheitsgurtes in den entkuppelten Zustand zurückgebracht werden. Hierdurch wird die Gurtwelle beim Drehen, insbesondere in Bandauszugsrichtung, freigegeben. Das Zurückbringen in den entkuppelten Zustand kann durch Federkraft, insbesondere durch die von der Halteeinrichtung erzeugten Federkraft bewirkt werden

Für das Einrücken der Kupplung in die Eingriffsposition wird insbesondere die Anfangsphase des vom Treibmittel erzeugten Druckaufbaus ausgenutzt. Die vom Treibmittel gelieferte Kraft wird dadurch in eine Bewegung für das Einrücken des Kupplungselementes in die Eingriffsbewegung umgesetzt, daß eine Relativbewegung zwischen zwei vom Treibmittel angetriebene Bauteile erzeugt wird, die eine in Einrückrichtung auf das Kupplungselement einwirkenden Kraft bewirkt.

In bevorzugter Weise weist die Halteeinrichtung einen Träger auf, der federnd, insbesondere in Form einer Blattfeder, ausgebildet ist. Der Träger für das schwenkbar gelagerte Kupplungselement hält das Kupplungselement im Normalzustand in seiner Ruheposition und bringt das Kupplungselement nach Vollendung des Straffens des Sicherheitsgurtes wieder in seine Ruheposition zurück.

Bei der auf kinematischem Wege durch die Relativbewegung zweier vom Treibmittel angetriebener Bauteile erzeugten Krafteinwirkung auf das Kupplungselement haben in bevorzugter Weise die beiden Bauteile, an denen das Kupplungselement abgestützt ist, unterschiedliche Winkelgeschwindigkeiten um eine Achse, welche bevorzugt mit der Gurtwellenachse zusammenfällt. Aufgrund der unterschiedlichen Winkelgeschwindigkeiten wird die Halteeinrichtung oder ein Teil der Halteeinrichtung, insbesondere der Träger, so bewegt, daß beim Einrückvorgang ständig auf das Kupplungselement eine Kraft ausgeübt wird. Die Befestigungsstellen, an denen das Kupplungselement über die Halteeinrichtung an den beiden Bauteilen befestigt ist, können in einem bestimmten Winkelabstand voneinander um die Gurtwellenachse angeordnet sein. Dieser Winkelabstand beträgt bevorzugt etwa 180" oder etwas mehr.

Ein geeigneter Träger ist bandförmig ausgebildet und besitzt eine Bogenform. Im Bereich des Bogens kann das Kupplungselement am Träger gelagert sein.

Der bandförmige Träger kann in der Weise ausgebildet sein, daß er das gesamte Kupplungselement durchsetzt und an den beiden Bauteilen mit seinen Enden befestigt ist. Es ist jedoch auch möglich, daß der bandförmige Träger das Kupplungselement mit dem einen Bauteil verbindet und das Kupplungselement am anderen Bauteil beweglich, insbesondere schwenkbar, gelagert ist. In bevorzugter Weise verbindet dann der bandförmige Träger das Kupplungselement mit dem langsamer drehenden Bauteil, während die Schwenklagerung des Kupplungselementes an dem schneller drehenden Bauteil vorgesehen ist.

Bei der Einrückbewegung wird aufgrund der unterschiedlichen Winkelgeschwindigkeiten der Träger insbesondere in den Bereichen, in denen er sich vom Kupplungselement bis zu den Befestigungsstellen an den beiden Bauteilen erstreckt, in seiner Form veränderbar sein, so daß aufgrund der Relativbewegung, welche die beiden Bauteile zueinander haben, durch Formänderung der freien Trägerteile eine Einrückbewegung auf das Kupplungselement ausgeübt wird. Bei dem Ausführungsbeispiel mit der Schwenklagerung erfolgt eine Verschwenkung aufgrund der Krafteinwirkung.

In bevorzugter Weise ist die Einrückbewegung von außen radial nach innen zur Gurtwellenachse hin gerichtet.

Die beiden Bauteile können durch Kraftschluß, beispielsweise durch ein Getriebe, miteinander verbunden sein, wobei durch dieses Getriebe die Relativbewegung der beiden Bauteile und insbesondere die unterschiedlichen Winkelgeschwindigkeiten um die Gurtwellenachse erzeugt werden. Die beiden Bauteile können koaxial um die Gurtwellenachse umlaufen. Es ist jedoch auch möglich, daß wenigstens eines der beiden Bauteile bezüglich der Gurtwellenachse exzentrisch gelagert ist, wodurch dann um die Gurtwellenachse ebenfalls unterschiedliche Umlaufgeschwindigkeiten der beiden Bauteile erreicht werden können.

Zur Vereinfachung des Kupplungsaufbaus kann das eine Bauteil am anderen Bauteil gelagert sein.

Während des Einrückens, insbesondere nachdem das Kupplungselement mit dem Teil, in welches es eingerückt werden soll, bereits in Eingriff steht, kann die Trägerfunktion des .Trägers und insbesondere die Kraftausübung des Trägers auf das Kupplungselement aufgehoben werden. Spätestens nach dem vollständigen Einrücken kann die Trägerfunktion bzw. die Kraftausübung des Trägers aufgehoben werden, wobei jedoch die Rückstellfedereigenschaft beibehalten wird. Dies kann beispielsweise dadurch erfolgen, daß der Träger an einer Stelle zwischen dem Kupplungselement und einer der beiden Befestigungsstellen, insbesondere der Befestigungsstelle, welche an dem langsamer umlaufenden Bauteil vorgesehen ist, beispielsweise an einer Sollbruchstelle, zerstört wird. Es ist auch möglich, die Befestigungsstelle selbst zu zerstören.

Anhand der Figuren wird an Ausführungsbeispielen die Erfindung noch näher erläutert. Es zeigt:
- Fig. 1:: ein erstes Ausführungsbeispiel in Seitenansicht;
- Fig. 2:: eine schnittbildliche Darstellung des Ausführungsbeispiels der Fig. 1;
- Fig. 3 A - F:: in zeitlicher Aufeinanderfolge verschiedene Zustände des Ein- und Ausrückvorganges;
- Fig. 4:: ein zweites Ausführungsbeispiel in Seitenansicht; und
- Fig. 5:: ein drittes Ausführungsbeispiel.

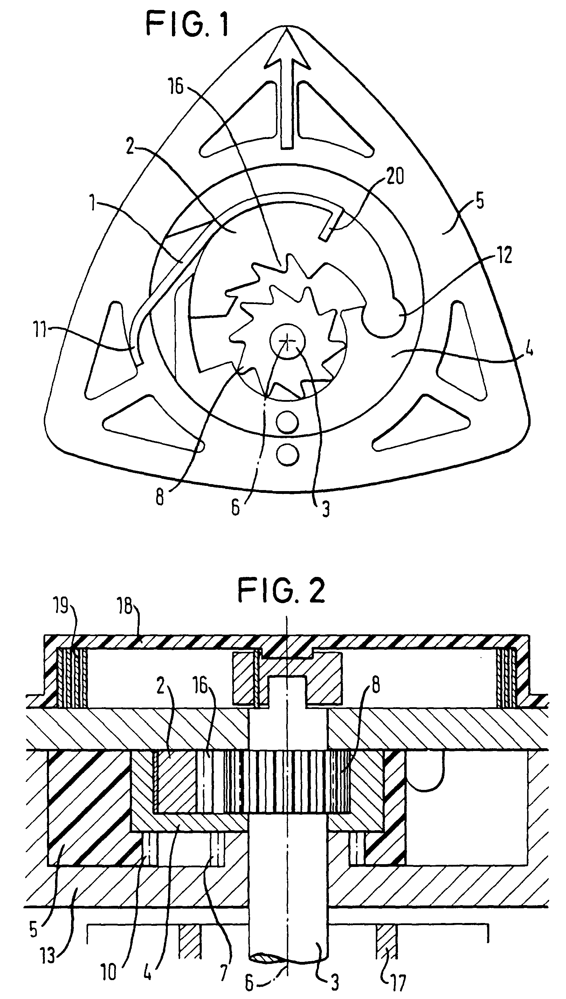

Bei dem in den Figuren 1 bis 3 dargestellten Ausführungsbeispiel ist die Kupplung in einem als Drehkolben 5 ausgebildeten Rotationsantrieb, welcher als das eine Bauteil exzentrisch bezüglich der Gurtwellenachse 6 in einem Gehäuse 13 gelagert ist, enthalten. Ein derartiger Rotationsantrieb ist beispielsweise in der europäischen Patentanmeldung Nr. 94 107 777.8 beschrieben. Der Drehkolben 5 besitzt eine Innenverzahnung 10, welche in eine ortsfeste Verzahnung 7 am Gehäuse 13 eingreift. Der Drehkolben 5 ist ferner am Exzenterbügel 4 gelagert. Hierzu besitzt der Exzenterbügel 4 eine zylindrische Außenfläche. Der Exzenterbügel 4 ist ferner drehbar an der Gurtwelle 3 gelagert, wie insbesondere aus der Fig. 2 zu ersehen ist. Die Gurtwelle 3 besitzt eine Außenverzahnung 8. Dieser Außenverzahnung 8 liegt eine Verzahnung 16, welche radial nach innen gerichtet ist, am nach Art eines Exzentersteins ausgebildeten Kupplungselement 2 gegenüber. Im in der Fig. 1 dargestellten ausgerückten Zustand ist die Gurtwelle 3 frei gegenüber dem Kupplungselement 2 und damit gegenüber dem Rotationsantrieb drehbar. An der Gurtwelle 3 befindet sich die Gurtspule 17, auf welcher der Sicherheitsgurt aufgewickelt wird. An der anderen Seite des Rotationsantriebes befindet sich eine Federkassette 18 mit einer Rückholfeder 19, welche die Gurtspule 17 in Aufwickelrichtung verspannt.

Das Kupplungselement 2 ist an zwei unterschiedlichen Bauteilen, welche bei ihrem Antrieb unterschiedliche Winkelgeschwindigkeiten um die Gurtwellenachse 6 ausfahren, abgestützt. Hierzu dient ein bandförmiger Träger 1, welcher als Federstahlband ausgebildet sein kann. Der bandförmige Träger 1 ist an einer Befestigungsstelle 11 im Drehkolben 5, welche r das eine Bauteil mit verringerter Winkelgeschwindigkeit bildet, befestigt. Der bandförmige Träger 1 ist an seinem anderen Ende mit dem Kupplungselement 2 an einer Stelle 20, die eine feste Verbindungsstelle bildet, fest verbunden. Das Kupplungselement 2 ist an einer Befestigungsstelle 12 mit dem Exzenterbügel 4, welcher das zweite Bauteil mit insbesondere höherer Winkelgeschwindigkeit bildet, beweglich, insbesondere schwenkbar, verbunden. Durch die Befestigungsstellen 11 und 12 sowie die feste hakenförmige Verbindungsstelle 20 zwischen Kupplungselement 2 und bandförmigem Träger 1 wird eine Halteeinrichtung für das Kupplungselement 2 zwischen zwei Bauteilen geschaffen, die bei ihrem Antrieb mit unterschiedlichen Winkelgeschwindigkeiten um die Gurtwellenachse 6 umlaufen. Das eine Bauteil wird von dem Drehkolben 5 gebildet und das andere Bauteil von dem im Drehkolben 5 angeordneten Exzenterbügel 4.

Wenn beispielsweise bei einer überhöhten Fahrzeugbeschleunigung oder -abbremsung durch eine Sensoreinrichtung das Treibmittel, welches pyrotechnisch ausgebildet sein kann, gezündet wird, wird vom Treibmittel der Drehkolben 5 angetrieben. Durch die Kolbendrehung wird der Exzenterbügel 4 mit höherer Geschwindigkeit um die Drehachse des Drehkolbens 5 gedreht, als sich der Drehkolben 5 dreht.

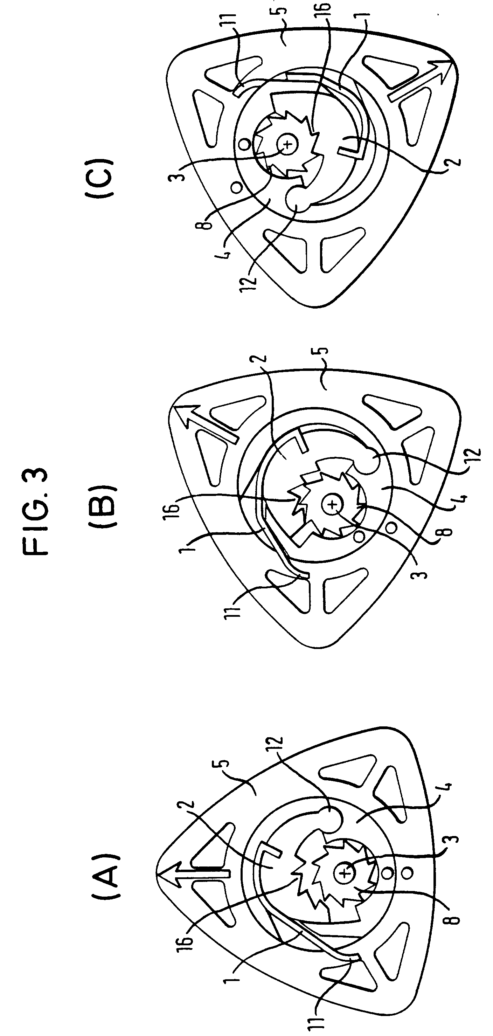

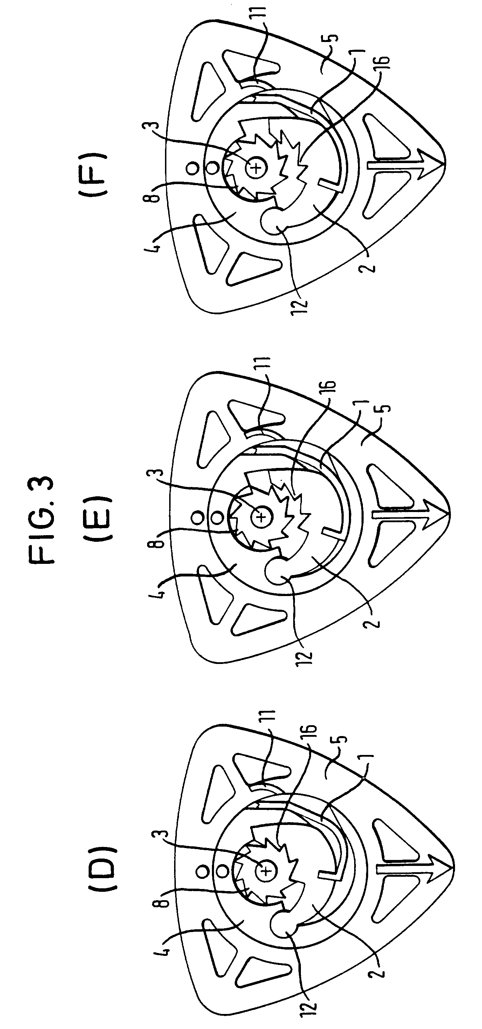

Aufgrund der unterschiedlichen Winkelgeschwindigkeiten, welche der Exzenterbügel 4 und der Drehkolben 5 haben, wird das Kupplungselement 2 in Richtung auf die Gurtwellenachse 6 zu bewegt, wie das in den einzelnen Betriebszuständen der Fig. 3 (A), (B), (C) gezeigt ist:

Bei der Drehung wird das eine Ende des bandförmigen Trägers 1 im Drehkolben 5 an der Stelle 11 mit einer bestimmten Haltekraft festgehalten, so daß sich der bandförmige Träger 1 verformt und auf das Kupplungselement eine Kraft ausgeübt wird. Durch diese Kraft wird das Kupplungselement 2 an der Befestigungsstelle 12, welche eine Schwenkachse bildet, geschwenkt, so daß seine Verzahnung 16 in Eingriff mit der Außenverzahnung 8 an der Gurtwelle 3 kommt. In der Fig. 3 (A) ist der Anfang der Einrückbewegung dargestellt, in der Fig. 3 (B) ist eine Zwischenstufe dargestellt, in welcher die beiden Verzahnungen 16 und 8 beginnen, miteinander in Eingriff kommen, und in Fig. 3 (C) ist der Endzustand nach dem Einrücken des Kupplungselementes 2 in die Verzahnung 8 der Gurtwelle 3 dargestellt. Das vom Drehkolben 5 erzeugte Drehmoment um die Gurtwellenachse 6 wird über den Exzenterbügel 4 und das an der Befestigungsstelle 12 am Exzenterbügel 4 befestigte Kupplungselement 2 auf die Gurtwelle 3 und die Gurtspule 17 übertragen. Dabei ist der bandförmige Träger 1 vollständig aus der Befestigungsstelle 11 am Drehkolben 5 entfernt. Das Kupplungselement 2 kann somit die gegenüber dem Drehkolben 5 erhöhte Winkelgeschwindigkeit des Exzenterbügels 4 annehmen.

Wenn bei Beginn der Einrückbewegung eine ungünstige Positionierung der Verzahnung 8 an der Gurtwelle gegenüber der Verzahnung 16 am Kupplungselement 2 in der Weise vorhanden ist, daß Zahn auf Zahn trifft, wird aufgrund der Relativdrehung, welche der Exzenterbügel 4 gegenüber dem Kolben 5 hat, ständig die nach innen gerichtete Kraft auf das Kupplungselement 2 ausgeübt, so daß dann, wenn die beiden aufeinandertreffenden Zähne bei der Weiterdrehung des Exzenterbügels 4 sich voneinander entfernen, die Zähne der Verzahnung 16 in die Zahnlücken der Verzahnung 8 gedrückt werden.

Aus den Darstellungen (D - F) der Fig. 3 ist das Auskuppeln des Kupplungselementes 2 nach dem Strammvorgang dargestellt. Das Kupplungselement 2 wird aufgrund der Federkraft des bandförmigen Trägers 1 aus der in der Fig. 3 (D) dargestellten Eingriffsposition nach Beendigung des Strammvorganges in Richtung zur Ausgangsposition zurückgestellt, wie es die Fig. 3 (E) zeigt. Die Ausrückbewegung kann dabei so weit gehen, daß die Verzahnung 8 auf der Gurtwelle und die Verzahnung 16 am Kupplungselement 2 beim Drehen der Gurtwelle 3 aufeinander ratschen. Die Ausrückbewegung kann jedoch, wie es die Fig. 3 (F) zeigt, so weit gehen, daß die Verzahnungen 16 und 8 völlig voneinander getrennt sind und eine freie Drehung der Wickelwelle 3 möglich ist.

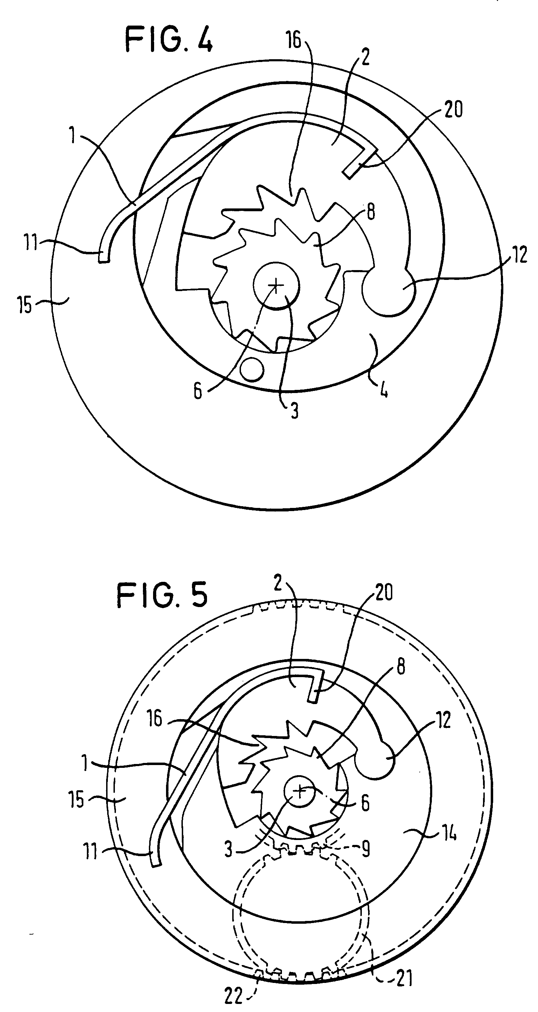

Bei den in den Figuren 4 und 5 dargestellten Ausführungsbeispielen wird von einem um die Gurtwellenachse 6 drehbaren Rotor 15 das Drehmoment auf die Gurtwelle 3 übertragen. Der Rotor 15, welche r das eine Bauteil bildet, kann eine Kupplungsscheibe sein, die von einem durch Strafferantrieb angetriebenen Zugseil in Drehung versetzt wird, wie es beispielsweise aus der EP 0 529 265 Al bekannt ist. Der Rotor kann jedoch auch ein um die Gurtwellenachse 6 drehbares Turbinenrad, Peltonrad oder dergl. sein, das von einem Druckgas oder sonstigem Antriebsmittel angetrieben wird.

Bei dem in der Fig. 4 dargestellten Ausführungsbeispiel ist der Exzenterbügel 4 exzentrisch zur Gurtwellenachse 6 im Rotor 15 gelagert. Dieser Exzenterbügel bildet das zweite Bauteil, welche s beim Antrieb des Rotors 15 eine Relativbewegung gegenüber dem Rotor 15 ausführt. Beim Ausführungsbeispiel der Fig. 4 wird dies durch die exzentrische Lagerung des Exzenterbügels 4 an der Gurtwelle 3 erreicht. Beim Ausführungsbeispiel der Fig. 5 ist zwischen den Rotor 15 und dem zweiten Bauteil 14, welches koaxial mit dem Rotor 15 um die Gurtwellenachse 6 drehbar ist, ein Getriebe, beispielsweise ein Zahnrad 21, geschaltet. Das Zahnrad 21 kämmt mit einer Innenverzahnung 22 am Rotor 15 und einer Verzahnung 9 am um die Gurtwellenachse 6 drehbaren Bauteil 14. Auf diese Weise wird erreicht, daß die beiden Bauteile 14 und 15 in entgegengesetzten Drehrichtungen sich drehen. Das Kupplungselement 2 ist im Bauteil 14 an der Befestigungsstelle 12 schwenkbar gelagert, wie das bei den Ausführungsbeispielen der Figuren 1 bis 4 der Fall ist.

Es ist auch möglich, das Ausführungsbeispiel der Fig. 5 in der Weise auszugestalten, daß das Bauteil 15 festgehalten wird und das Zahnrad 21 wie ein Planetenrad angetrieben wird, wie es in der deutschen Patentanmeldung P 44 29 731.9 beschrieben ist. Hierbei wird der Drehantrieb, welcher von dem als Planetenrad ausgebildeten Zahnrad 21 erzeugt wird, zunächst zum Einrücken des Kupplungselementes 2 in die Verzahnung 8 der Gurtwelle 3 verwendet und bei eingerücktem Kupplungselement 2 zum Strafferantrieb der Gurtwelle 3.

Bei den vorstehend beschriebenen Ausführungsbeispielen wird die Kraft des Treibmittels mittelbar durch unterschiedliche Bewegungen der vom Treibmittel angetriebenen Bauteile 4, 5 (Figuren 1 bis 3) und 4, 15 (Figur 4) sowie 14, 15 (Figur 5) und die dadurch erfolgte Verformung des Trägers 1 auf das Kupplungselement 2 für den Einrückvorgang zur Einwirkung gebracht. Wie insbesondere aus der Fig. 2 zu ersehen ist, besitzt der Exzenterbügel 4 eine topfähnliche Gestalt. Für den kompakten Aufbau der Kupplung ist das Kupplungselement 2 mit dem Träger 1 im Topfinnern gelagert. Die als Schwenklager ausgebildete Befestigungsstelle 12 befindet sich am Topfboden. Die Befestigungsstelle 11 befindet sich an der Innenwand des Topfes, und die hakenförmige Befestigungsstelle 20, an welche r der federnde Träger 1 am Kupplungselement 2 angreift, befindet sich bezüglich der Wickelwellenachse 6 an einer Stelle, die den Winkelabstand eines stumpfen Winkels (z.B. ca. 140°) gegenüber dem Schwenklager (Befestigungsstelle 12) hat.

## Patentansprüche

1. Kupplung zur Drehmomentübertragung von einem durch ein Treibmittel betriebenen Drehantrieb auf eine Gurtwelle (17) eines Sicherheitsgurtaufrollers zum Straffen eines Sicherheitsgurtes, mit wenigstens einem im Ruhezustand im entkuppelten Zustand gehaltenen Kupplungselement (2), das für die Drehmomentübertragung in Kupplungseingriff mit einem mit der Gurtwelle (17) kraftschlüssig verbundenen Eingriffsteil eingerückt wird, wobei das Kupplungselement (2) an einem drehbaren Bauteil (4; 14) gelagert und in den Kupplungseingriff schwenkbar ist und von einer Halteeinrichtung (1, 20) in entkuppeltem Zustand gehalten ist, **dadurch gekennzeichnet, daß** das Kupplungselement (2) mit Hilfe der Halteeinrichtung (1, 20) an zwei unterschiedlichen vom Treibmittel angetriebenen Bauteilen (4, 5; 14, 15) abgestützt ist, und daß durch eine Relativbewegung des einen Bauteils gegenüber dem anderen Bauteil von der Halteeinrichtung (1, 20) auf das Kupplungselement (2) eine Kraft in Einrückrichtung ausgeübt wird.

2. Kupplung nach Anspruch 1, **dadurch gekennzeichnet, daß** die beiden Bauteile (4, 5; 14, 15) mit unterschiedlichen Winkelgeschwindigkeiten um die Gurtwellenachse (6) bewegbar sind.

3. Kupplung nach Anspruch 1 oder 2, **dadurch gekennzeichnet, daß** die beiden Befestigungsstellen (11, 12), an denen das Kupplungselement (2) an den beiden Bauteilen (4, 5; 14, 15) abgestützt ist, in einem bestimmten Winkelabstand voneinander um die Gurtwellenachse (6) angeordnet sind.

4. Kupplung nach einem der Ansprüche 1 bis 3, **dadurch gekennzeichnet, daß** die Form wenigstens eines Teils der Halteeinrichtung (1, 20) durch die unterschiedlich um die Gurtwellenachse (6) umlaufenden Bauteile (4, 5; 14, 15) zur Erzeugung der Einrückbewegung des Kupplungselements (2) veränderbar ist.

5. Kupplung nach nach einem der vorhergehenden Ansprüche, **dadurch gekennzeichnet, daß** das Kupplungselement (2) gegen eine von der Halteeinrichtung (1, 20) ausgeübten Haltekraft in den Kupplungseingriff geschwenkt ist.

6. Kupplung nach einem der vorhergehenden Ansprüche, **dadurch gekennzeichnet, daß** die vom Treibmittel erzeugte Krafteinwirkung nach dem Einrückvorgang beendet ist.

7. Kupplung nach einem der vorhergehenden Ansprüche, **dadurch gekennzeichnet, daß** das Kupplungselement (2) durch eine bei der Drehmomentübertragung wirkenden Selbsthaltekraft mit dem Eingriffsteil (8) in Eingriff gehalten ist.

8. Kupplung nach einem der vorhergehenden Ansprüche, **dadurch gekennzeichnet, daß** das Kupplungselement (2) nach dem Straffen des Sicherheitsgurtes durch Federkraft in den entkuppelten Zustand ausrückbar ist.

9. Kupplung nach einem der vorhergehenden Ansprüche, **dadurch gekennzeichnet, daß** die Halteeinrichtung (1, 20) einen Träger (1) für das Kupplungselement (2) aufweist, der an wenigstens einem der beiden Bauteile (4, 5; 14, 15) abgestützt ist.

10. Kupplung nach einem der vorhergehenden Ansprüche, **dadurch gekennzeichnet, daß** das Kupplungselement (2) an dem schneller drehenden Bauteil schwenkbar abgestützt ist.

11. Kupplung nach Anspruch 9 oder 10, **dadurch gekennzeichnet, daß** der Träger (1) federnd ausgebildet ist.

12. Kupplung nach Anspruch 11, **dadurch gekennzeichnet, daß** das Kupplungselement (2) durch die Federwirkung des Trägers (1) in die Ruhestellung ausrückbar ist.

13. Kupplung nach einem der Ansprüche 9 bis 12, **dadurch gekennzeichnet, daß** der Träger (1) im wesentlichen bogenförmig ausgebildet und um die Gurtwellenachse (6) angeordnet ist.

14. Kupplung nach einem der vorhergehenden Ansprüche, **dadurch gekennzeichnet, daß** die Einrückbewegung von außen radial nach innen gerichtet ist.

15. Kupplung nach einem der vorhergehenden Ansprüche, **dadurch gekennzeichnet, daß** die beiden angetriebenen Bauteile (4, 5; 14, 15) durch Kraftschluß miteinander verbunden sind.

16. Kupplung nach einem der vorhergehenden Ansprüche, **dadurch gekennzeichnet, daß** die beiden Bauteile (4, 5; 14, 15) koaxial um die Gurtwellenachse (6) umlaufen.

17. Kupplung nach einem der vorhergehenden Ansprüche, **dadurch gekennzeichnet, daß** wenigstens eines der beiden Bauteile (4, 5; 14, 15) bezüglich der Gurtwellenachse (6) exzentrisch gelagert ist.

18. Kupplung nach einem der vorhergehenden Ansprüche, **dadurch gekennzeichnet, daß** das eine Bauteil (4; 14) am anderen Bauteil (5; 15) gelagert ist.

19. Kupplung nach Anspruch 18, **dadurch gekennzeichnet, daß** das eine Bauteil (5; 15) an einer zylindrischen Außenfläche des anderen Bauteils (4; 14) drehbar gelagert ist und daß das andere Bauteil (4; 14) um die Gurtwellenachse (6) drehbar gelagert ist.

20. Kupplung nach einem der vorhergehenden Ansprüche, **dadurch gekennzeichnet, daß** das Kupplungselement (2) beim Einrücken in Zahneingriff kommt.

21. Kupplung nach einem der vorhergehenden Ansprüche, **dadurch gekennzeichnet, daß** das eine Bauteil (5; 15) Teil eines Rotationsantriebs ist.

22. Kupplung nach Anspruch 21, **dadurch gekennzeichnet, daß** das eine Bauteil (5; 15) ein bezüglich der Gurtwellenachse (6) exzentrisch gelagerter Drehkolben ist, der mit einer ortsfesten Verzahnung (7) in Zahneingriff steht.

## Claims

1. A coupling for torque transmission from a propellant-operated rotary drive to a belt shaft (17) of a seat belt retractor for tensioning a seat belt, comprising at least one coupling element (2) maintained in the uncoupled condition in the non-operative condition and which, for torque transmission, is brought into coupling engagement with an engaging part connected in force transmission to the belt shaft (17), the coupling element (2) being mounted on a rotatable component (4; 14) and being able to be pivoted into coupling engagement, and maintained in the uncoupled condition by a retaining means (1, 20), **characterized in that** by means of the retaining means (1, 20) the coupling element (2) is supported on two different components (4, 5; 14, 15) which are driven by the propellant and **in that** a force acting in the direction of engagement is exerted by the retaining means (1, 20) on the coupling element (2) due to a relative movement of the one component with respect to the other component.

2. The coupling as set forth in claim 1, **characterized in that** the two components (4, 5; 14, 15) are movable about the belt shaft axis (6) with differing angular velocities.

3. The coupling as set forth in claim 1 or 2, **characterized in that** the two fastening points (11, 12) at which the coupling element (2) is supported on the two components (4, 5; 14, 15), are arranged in a specific angular spacing from each other about the belt shaft axis (6).

4. The coupling as set forth in any of the claims 1 to 3, **characterized in that** the shape of at least one part of the retaining means (1, 20) is variable by the components (4, 5; 14, 15), which rotate about the belt shaft axis (6) differingly, for generating the engaging movement of the coupling element (2).

5. The coupling as set forth in any of the preceding claims, **characterized in that** the coupling element (2) is pivoted into the coupling engagement against a holding force exerted by the retaining means (1, 20).

6. The coupling as set forth in any of the preceding claims, **characterized in that** the effect of the force generated by the propellant is terminated after the engaging action.

7. The coupling as set forth in any of the preceding claims, **characterized in that** the coupling element (2) is maintained in engagement with the engaging part (8) by a self-retaining force effective during torque transmission.

8. The coupling as set forth in any of the preceding claims, **characterized in that** after tensioning of the seat belt the coupling element (2) is disengageable into the uncoupled condition by spring force.

9. The coupling as set forth in any of the preceding claims, **characterized in that** the retaining means (1, 20) comprises a carrier (1) for the coupling element (2), the carrier being supported by at least one of the two components (4, 5; 14, 15).

10. The coupling as set forth in any of the preceding claims, **characterized in that** the coupling element (2) is pivotally supported by the faster rotating component.

11. The coupling as set forth in claim 9 or 10, **characterized in that** the carrier (1) is configured resiliently.

12. The coupling as set forth in claim 11, **characterized in that** the coupling element (2) is disengageable into the non-operative position by the spring effect of the carrier (1).

13. The coupling as set forth in any of the claims 9 to 12, **characterized in that** the carrier (1) is configured roughly bow-shaped and is arranged around the belt shaft axis (6).

14. The coupling as set forth in any of the preceding claims, **characterized in that** the engaging movement is oriented from the outside radially inwards.

15. The coupling as set forth in any of the preceding claims, **characterized in that** the two driven components (4, 5; 14, 15) are connected to each other for force transmission.

16. The coupling as set forth in any of the preceding claims, **characterized in that** the two components (14, 15) rotate coaxially about the belt shaft axis (6).

17. The coupling as set forth in any of the preceding claims, **characterized in that** at least one of the two components (4, 5; 14, 15) is mounted eccentrically with respect to the belt shaft axis (6).

18. The coupling as set forth in any of the preceding claims, **characterized in that** the one component (4; 14) is mounted on the other component (5; 15).

19. The coupling as set forth in claim 18, **characterized in that** the one component (5; 15) is rotatably mounted on a cylindrical outer surface of the other component (4; 14) and **in that** the other component (4; 14) is mounted rotatably about the belt shaft axis (6).

20. The coupling as set forth in any of the preceding claims, **characterized in that** on engagement the coupling element (2) is brought into meshing contact.

21. The coupling as set forth in any of the preceding claims, **characterized in that** the one component (5; 15) is part of a rotary drive.

22. The coupling as set forth in claim 21, **characterized in that** the one component (5; 15) is a rotary piston mounted eccentrically with respect to the belt shaft axis (6), the piston meshing with a stationary toothing (7).

## Revendications

1. Dispositif d'accouplement pour transmettre un couple depuis un mécanisme d'entraînement rotatif mû par un agent propulseur à un arbre d'enrouleur de ceinture de sécurité pour serrer une ceinture de sécurité, comportant au moins un élément d'accouplement (2) maintenu au repos en position découplée et qui, pour la transmission du couple, est amené en engagement d'accouplement avec une pièce d'engagement reliée à transmission de forces à l'arbre de ceinture (17), l'élément d'accouplement (2) étant monté sur une pièce constitutive (4; 14) rotative et susceptible de pivoter dans l'engagement d'accouplement. et étant maintenu en position découplée par des moyens de retenue (1, 20), **caractérisé en ce que** l'élément d'accouplement (2) est soutenu à l'aide des moyens de retenue (1, 20) sur deux différentes pièces constitutives (4, 5 ; 14, 15) entraînées par l'agent propulseur et **en ce qu'**une force en direction d'engagement est exercée par le moyen de retenue (1, 20) sur l'élément d'accouplement (2) grâce à un mouvement relatif de l'une des pièces constitutives par rapport à l'autre pièce constitutive.

2. Dispositif d'accouplement selon la revendication 1, **caractérisé en ce que** les deux pièces constitutives (4, 5 ; 14, 15) peuvent se déplacer autour de l'axe (6) de l'arbre de ceinture avec des vitesses angulaires différentes.

3. Dispositif d'accouplement selon la revendication 1 ou 2, **caractérisé en ce que** les deux points de fixation (11, 12) au niveau desquels l'élément d'accouplement (2) prend appui sur les deux pièces constitutives (4, 5 ; 14, 15) sont agencés autour de l'axe (6) de l'arbre de ceinture à une distance angulaire déterminée l'un de l'autre.

4. Dispositif d'accouplement selon l'une quelconque des revendications 1 à 3, **caractérisé en ce que** la forme d'au moins une partie du dispositif de retenue (1, 20) peut être modifiée par les parties constitutives (4, 5 ; 14, 15) tournant de façon différente autour de l'axe (6) de l'arbre de ceinture pour produire le mouvement d'engagement de l'élément d'accouplement (2).

5. Dispositif d'accouplement selon l'une quelconque des revendications précédentes, **caractérisé en ce que** l'élément d'accouplement (2) est pivoté dans l'engagement d'accouplement à l'encontre d'une force de retenue exercée par le moyen de retenue (1, 20).

6. Dispositif d'accouplement selon l'une quelconque des revendications précédentes, **caractérisé en ce que** l'effet de force produit par l'agent propulseur se termine après l'opération d'engagement.

7. Dispositif d'accouplement selon l'une quelconque des revendications précédentes, **caractérisé en ce que** l'élément d'accouplement (2) est maintenu en engagement avec la pièce d'engagement (8) par une force d'automaintien agissant lors de la transmission du couple.

8. Dispositif d'accouplement selon l'une quelconque des revendications précédentes, **caractérisé en ce qu'**après le serrage de la ceinture de sécurité, l'élément d'accouplement (2) peut être désengrené dans la position découplée par la force d'un ressort.

9. Dispositif d'accouplement selon l'une quelconque des revendications précédentes, **caractérisé en ce que** le moyen de retenue (1, 20) présente un support (1) pour l'élément d'accouplement (2) qui prend appui sur au moins l'une des pièces constitutives (4, 5 ; 14, 15).

10. Dispositif d'accouplement selon l'une quelconque des revendications précédentes, **caractérisé en ce que** l'élément d'accouplement (2) prend appui, en pouvant pivoter, sur la pièce constitutive qui tourne plus vite.

11. Dispositif d'accouplement selon la revendication 9 ou 10, **caractérisé en ce que** le support (1) est réalisé de manière élastique.

12. Dispositif d'accouplement selon la revendication 12, **caractérisé en ce que** l'élément d'accouplement (2) peut être désengagé dans une position de repos par l'effet de ressort du support (1).

13. Dispositif d'accouplement selon l'une quelconque des revendications 9 à 12, **caractérisé en ce que** le support (1) est réalisé sensiblement en forme d'arc et est agencé autour de l'axe (6) de l'arbre de ceinture.

14. Dispositif d'accouplement selon l'une quelconque des revendications précédentes, **caractérisé en ce que** le mouvement d'engagement est dirigé radialement de l'extérieur vers l'intérieur.

15. Dispositif d'accouplement selon l'une quelconque des revendications précédentes, **caractérisé en ce que** les deux pièces constitutives (4, 5 ; 14, 15) entraînées sont reliées l'une à l'autre de manière à transmettre des forces.

16. Dispositif d'accouplement selon l'une quelconque des revendications précédentes, **caractérisé en ce que** les deux parties constitutives (4, 5 ; 14, 15) tournent coaxialement autour de l'axe (6) de l'arbre de ceinture.

17. Dispositif d'accouplement selon l'une quelconque des revendications précédentes, **caractérisé en ce qu'**au moins l'une des deux pièces constitutives (4 ; 14) est montée de façon excentrée par rapport à l'axe (6) de l'arbre de ceinture.

18. Dispositif d'accouplement selon l'une quelconque des revendications précédentes, **caractérisé en ce que** l'une des pièces constitutives (4, 14) est montée sur l'autre pièce constitutive (5 ; 15).

19. Dispositif d'accouplement selon la revendication 18, **caractérisé en ce que** l'une des pièces constitutives (5 ; 15) est montée rotative sur une surface extérieure cylindrique de l'autre pièce constitutive (4 ; 14) et **en ce que** l'autre partie constitutive (4 ; 14) est montée rotative autour de l'axe (6) de l'arbre de ceinture.

20. Dispositif d'accoùplement selon l'une quelconque des revendications précédentes, **caractérisé en ce que** l'élément d'accouplement (2) vient en engrènement lors de l'engagement.

21. Dispositif d'accouplement selon l'une quelconque des revendications précédentes, **caractérisé en ce que** l'une des pièces constitutives (5 ; 15) fait partie d'un mécanisme d'entraînement en rotation.

22. Dispositif d'accouplement selon la revendication 21, **caractérisé en ce que** l'une des pièces constitutives (5 ; 15) est un piston rotatif monté de façon excentrée par rapport à l'axe de l'arbre de ceinture (6) qui est en engrènement avec une denture fixe (7).
